Europäisches Patentamt

European Patent Office

Office européen des brevets

(19)

(11) Veröffentlichungsnummer: **0 238 941 B1**

# EUROPÄISCHE PATENTSCHRIFT

(12)

(45) Veröffentlichungstag der Patentschrift: **05.02.92**

(51) Int. Cl.5: **A01G 25/00**, C02F 1/14

(21) Anmeldenummer: **87103566.3**

(22) Anmeldetag: **12.03.87**

(54) Verfahren und Vorrichtung zum Bewässern von Böden.

(30) Priorität: **27.03.86 DE 3610548**

(43) Veröffentlichungstag der Anmeldung:
**30.09.87 Patentblatt 87/40**

(45) Bekanntmachung des Hinweises auf die
Patenterteilung:
**05.02.92 Patentblatt 92/06**

(84) Benannte Vertragsstaaten:
**DE ES FR GB NL**

(56) Entgegenhaltungen:

| | |
|---|---|
| DE-A- 2 544 190 | DE-A- 2 606 048 |
| DE-A- 2 644 737 | DE-A- 2 755 219 |
| DE-A- 2 830 688 | DE-A- 3 049 557 |
| DE-A- 3 049 558 | DE-A- 3 409 510 |
| DE-B- 1 632 943 | DE-C- 2 737 745 |
| DE-C- 2 753 311 | US-A- 3 340 186 |
| US-A- 3 415 719 | US-A- 4 178 715 |

Brockhaus Enzyklopädie, 1971, Stichwort:Entsalzung, Hyperfiltration, Membranfilter

Chemie Ingenieurtechnik, 56 (1984), Nr. 7, S.
514-521

(73) Patentinhaber: **Erwin Sick GmbH Optik-
Elektronik
Sebastian-Kneipp-Strasse 1
W-7808 Waldkirch(DE)**

(72) Erfinder: **Sick, Erwin, Dr.
Stifterweg 6
W-8021 Icking(DE)**
Erfinder: **Penningsfeld, Franz, Prof. Dr.
Mauermayrstrasse 9
W-8050 Freising(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

## Beschreibung

Die Erfindung betrifft ein Verfahren zum Bewässern von Böden mit aus Salzwasser gewonnenem Süßwasser nach dem Oberbegriff des Anspruchs 1.

Es ist bereits eine im Erdreich verlegte Bewässerungsvorrichtung bekannt (DE-A-34 09 510), welche aus rohrförmigen, miteinander verbundenen Gefäßen besteht, die an Wasserzufuhrleitungen und Überlaufleitungen angeschlossen sind. Der untere Teil der Gefäße besteht aus einem wasserundurchlässigen und der Deckelteil der Gefäße aus einem wasserdampf-bzw. wasserdurchlässigen Material. Relativ zur Umgebung erwärmtes salzhaltiges Wasser wird durch den wasserundurchlässigen unteren Teil des Gefäßes hindurchgeleitet, wobei ein Teil des Wassers in den darüberliegenden freien Raum unterhalb des Deckelteils verdampft. Der Wasserdampf gelangt zum Deckelteil, welcher sich aufgrund des darüber befindlichen Erdreichs auf einer niedrigeren Temperatur befindet. Der Wasserdampf durchdringt den Deckel und kondensiert an dieser Stelle, so daß das gebildete Wasser in das Erdreich gelangt und die dort befindlichen Pflanzenwurzeln mit Wasser versorgt. Teilweise sammelt sich das Wasser am Deckelteil und läuft über Rinnen ab, wo es über geeignete Einrichtungen abgenommen werden kann.

Nachteilig an dieser bekannten Bewässerungsvorrichtung ist, daß die Verdampfung nur über die vergleichsweise kleine freie Oberfläche der durch den unteren Teil des Gefäßes geleiteten Flüssigkeit erfolgen kann, so daß ein niedrigerer Verdampfungswirkungsgrad vorliegt. Eine Verlegung der Bewässerungsvorrichtung ist nur in ebenem oder ein sehr geringes Gefälle aufweisendem Gelände möglich, da sonst die Gefahr besteht, daß das im Gefäß befindliche Salzwasser durch den wasserdurchlässigen Deckel oder an dessen Rändern in das Erdreich austritt. Weiter ist das bei der bekannten Bewässerungsvorrichtung von unten nach oben vorhandene Temperaturgefälle nachteilig, welches zu einer Kondensation des Wasserdampfes unmittelbar am Deckelteil führt; dadurch sind die Wurzeln der darüber befindlichen Pflanzen bestrebt, bis zum Deckelteil und in diesen hinein zu wachsen, was der Verteilung des kondensierten Wassers über größere Raumbereiche entgegenwirkt.

Die gleichen Nachteile weist ein weiteres bekanntes Verfahren zum Gewinnen von Süßwasser aus Meerwasser für die Bewässerung von Agrokulturen auf (DE-C-27 53 311). Dabei besteht noch der weitere Nachteil, daß doppelwandige, mit verschiedenen Materialien ausgekleidete und mit Öffnungen versehene, aufwendige und störanfällige Rohre notwendig sind.

Weiter ist aus der DE-A-3049558 ein System für die künstliche, unterirdische Bewässerung oder Tränkung von Böden bekannt, bei welchem im Boden flexible Schläuche aus porösem Material mit einer nicht expandierten, porösen Innenstruktur verlegt sind. Den Schläuchen wird Süßwasser zugeführt, welches durch die Poren der Schlauchwände in das umgebende Erdreich gelangen soll. Beim Einsatz bestimmter Polymere für das Schlauchmaterial, die sehr stark hydrophob sind, kann es erforderlich sein, daß zu Beginn der Bewässerung das Innere des Schlauches zwecks Hydrophilierung mit einer geeigneten Flüssigkeit, wie z.B. Äthylalkohol oder einer Lösung eines Netzmittels vorbehandelt wird, damit eine bessere Benetzung im Innern des Schlauches durch Wasser stattfindet. Zur Förderung des Wasserdurchtritts durch die Schlauchwände kann im Innern der Schläuche auch ein erhöhter Druck vorgesehen sein. Nachteilig an diesem bekannten Bewässerungssystem ist, daß die Schläuche nicht mit Salzwasser beschickt werden können, sondern aus dem Salzwasser zunächst Süßwasser durch eine separate Destillsationsanlage erzeugt werden muß.

Weiter ist bereits eine Destillationsanlage bekannt, die nach der Membrandestillationsmethode arbeitet (US-A-33 40 186; Chem.-Ing.Techn. 56 (1984) Nr. 7, Seiten 514 bis 521). Bei dieser bekannten Destillationsmethode wird erwärmtes Salzwasser durch hydrophobe, mikroporige Schläuche geleitet, die von dem Salzwasser voll ausgefüllt und von kälterem Süßwasser umgeben sind. In den Schlauchwänden befindet sich nur Wasserdampf, der von dem erwärmten Salzwasser geliefert wird und in das kältere Süßwasser gelangt, wo er kondensiert.

Die Erfindung will eine besonders einfache, wirtschaftlich anwendbare und mit hohem Wirkungsgrad arbeitende Unterbodenbewässerung mit Süßwasser unter Verwendung von Salzwasser schaffen, welche auch in unebenem Gelände funktioniert und bei der ein Zuwachsen der für den Wassertransport verwendeten Rohre bzw. Hohlkörper durch Pflanzenwurzeln wirksam vermieden wird.

Zur Lösung dieser Aufgabe kennzeichnet sich die Erfindung dadurch, daß die Rohre oder flächigen Hohlgebilde aus hydrophobem, mikroporigem Material bestehen, daß Salzwasser den Innenraum der Rohre bzw. flächigen Hohlgebildes voll ausfüllt, und daß Salzwasser mit einer gegenüber der Temperatur des die Rohre bzw. flächigen Hohlgebilde umgebenden Erdreiches derart erhöhten Temperatur durch das Rohr bzw. die flächigen Hohlgebilde geleitet wird, daß die durch die Wand des Rohres bzw. der flächigen Hohlgebilde tretende Dampfmenge erst im umgebenden Erdreich kondensiert.

Der Erfindungsgedanke besteht somit darin, daß das den Hohlkörper umgebende Erdreich als Kondensator für den Wasserdampf ausgenutzt wird, denn der Hohlkörper ist entlang seiner hydrophoben, mikroporigen Wände vollständig mit dem relativ zum Erdreich erwärmten Salzwasser in Berührung, so daß der Hohlkörper sich praktisch auf die Temperatur des zu destillierenden Salzwassers befindet. Die Kondensation kann somit erst im umgebenden Erdreich stattfinden, und zwar in einem umso größeren Abstand vom Hohlkörper, je stärker das in unmittelbarer Umgebung des Hohlkörpers befindliche Erdreich bereits durch Wärmeleitung und/oder Kondensation erwärmt ist. Auf diese Weise wird erreicht, daß das kondensierte Wasser innerhalb eines großen Raumbereiches in der Umgebung des Hohlkörpers in situ unmittelbar aus dem dort hingelangten Wasserdampf gebildet wird. Da die Wurzeln von Pflanzen gegen hohe Temperaturen empfindlich sind, wird durch das erfindungsgemäße Verfahren ein zu nahes Heranwachsen der Wurzeln und ein Zuwachsen der Poren des Hohlkörpers wirksam vermieden, denn, da der Hohlkörper voll mit erhitztem Salzwasser ausgefüllt ist, wird am Hohlkörper und in seiner unmittelbaren Umgebung eine für den Wurzelwuchs zu hohe Temperatur aufrechterhalten. Weiter wird einem zu nahen Heranwachsen der Wurzeln an den hydrophoben, mikroporigen Hohlkörper dadurch entgegengewirkt, daß ein großer Teil des kondensierten Wassers sich erst in deutlicher Entfernung vom Hohlkörper bildet.

Ein weiterer besonderer Vorteil des erfindungsgemäßen Verfahrens ist darin zu sehen, daß aufgrund der vollständigen Ausfüllung des Hohlraums des Hohlkörpers mit Salzwasser die gesamte Berührungsfläche zwischen Salzwasser und dem hydrophoben, mikroporigen Wänden des Hohlkörpers als Verdampfungsfläche zur Verfügung steht. Weiter kann der Hohlkörper z.B. in Form eines Rohres oder Schlauches auch in stark unebenem Gelände verlegt werden, weil der Hohlkörper vollständig mit dem Salzwasser ausgefüllt ist und somit ein erhöhter hydrostatischer Druck in bestimmten Bereichen keine nachteiligen Auswirkungen auf den Verdampfungsvorgang hat. Von besonderer Bedeutung ist es also, daß sich innerhalb des Hohlkörpers keine Gas- bzw. Dampfphase befindet, daß diese Dampfphase jedoch innen an den hydrophoben, mikroporigen Wänden des Hohlkörpers beginnt und sich in radialer Richtung zumindest bis zur äußeren Fläche der Wand des Hohlkörpers, bevorzugt jedoch bis weit in das umgebende Erdreich hinein erstreckt, wo schließlich die Kondensationstemperatur erreicht wird.

Aufgrund der erfindungsgemäßen Ausbildung besteht auch keine Gefahr, daß Salzwasser in das Erdreich gelangt, weil das für die Wände des Hohlkörpers verwendete hydrophobe, mikroporige Material wohl Wasserdampf, aber kein Wasser hindurchläßt.

Insgesamt führt das erfindungsgemäße Verfahren zu einem besonders effektiven und verlustarmen Bewässerungssystem, weil die gesamte Oberfläche der hydrophoben, mikroporigen Wände für den Verdampfungsvorgang zur Verfügung stehen und der Dampf ohne irgendwelche Umwege oder Zwischenstationen unmittelbar in das Erdreich gelangt, wo wiederum ohne irgendwelche besonderen vorrichtungs-oder verfahrenstechnischen Maßnahmen allein aufgrund der natürlichen Gegebenheiten die Kondensation an Ort und Stelle stattfindet.

Ein weiterer Vorteil des erfindungsgemäßen Verfahrens besteht darin, daß die Bewässerung nicht nur mit Süßwasser, sondern sogar mit destilliertem Wasser erfolgt, was besonders in übersalzten Böden günstig ist. Bei Böden mit hohen pH-Werten, die durch Natrium- oder Kaliumcarbonate bedingt sein können, erfolgt aufgrund des erfindungsgemäßen Verfahrens mit mikroporigen, hydrophoben Hohlkörpern eine deutliche Senkung des pH-Wertes sowie eine Salzauswaschung. Außerdem werden durch die mikroporigen Wände des Hohlkörpers Bakterien am Austreten aus dem Innern gehindert, wodurch sich z.B. Pflanzenkrankheiten nicht über das zur Bewässerung dienende Bewässerungssystem ausbreiten können.

Von wesentlicher Bedeutung für die Wirkungsweise des erfindungsgemäßen Verfahrens ist das Vorliegen einer ausreichenden Temperaturdifferenz zwischen dem Innenbereich des Hohlkörpers und der Kondensationszone im Boden. Da das durch den Hohlkörper kontinuierlich hindurchströmende Salzwasser das umgebende Erdreich allmählich erwärmt, soll der Hohlkörper mit auf eine vorbestimmte Temperatur erhitztem Salzwasser nur eine gewisse Zeit durchströmt werden, bis die Temperaturdifferenz zwischen dem im Hohlkörper befindlichen Salzwasser und dem Boden durch Kondensation weitgehend abgebaut ist. Während einer darauffolgenden Ruhepause kühlen sich der Hohlkörper und das umgebende Erdreich ab, so daß bei einer erneuten Durchströmungsphase wieder die erforderliche Temperaturdifferenz vorhanden ist.

Ein weiterer Vorzug des erfindungsgemäßen Verfahrens besteht in dem vergleichsweise geringen vorrichtungstechnischen Aufwand und in der geringen erforderlichen Pumpenleistung, so daß sich besonders die Solarenergie als Energiequelle anbietet. Da die Solarenergie nur tagsüber zur Verfügung steht, der zu bewässernde Boden aber nachts seine tiefste Temperatur erreicht, wird besonders bevorzugt so gearbeitet, da das tagsüber durch Solarenergie erhitzte Salzwasser in einem isolierten Vorratsbehälter gespeichert wird und die Einleitung erhitzten Salzwassers in den Hohlkörper in den nahe dem Morgen liegenden Nachtstunden erfolgt, wenn das den Hohlkörper umgebende Erdreich die niedrigste Temperatur des Tag-Nacht-Zyklus erreicht.

Eine ausreichende Kondensationsgeschwindigkeit im Erdreich wird erreicht, wenn die Temperaturdifferenz zwischen zugeführtem Salzwasser und Erdreich mindestens $3°$ C und vorzugsweise 20 bis $30°$ C beträgt.

In besonders vorteilhafter Weise läßt sich das erfindungsgemäße Verfahren mit einer Vorrichtung nach Anspruch 9 durchführen.

Durch Verwendung von Rohren als Hohlkörper läßt sich bequem eine flächendeckende Bewässerung erreichen, indem die Rohre in Pflanzabständen parallel zueinander verlegt werden, so daß die Bewässerung jeder einzelnen Pflanzenreihe gewährleistet ist. Weiter ist es möglich, daß die Rohre ringförmig im Wurzelbereich der Pflanzen, z.B. Sträucher bzw. Bäume verlegt werden.

Bei der bevorzugten Ausbildung der erfindungsgemäßen Vorrichtung nach Anspruch 9 wird erreicht, daß nur in Richtung auf den Wurzelbereich Wasserdampf austritt. Bei Verwendung eines flächigen Hohlgebildes muß darauf geachtet werden, daß es die zur Aufnahme der Bodendrücke erforderliche Eigensteifigkeit besitzt, was ggfs. durch versteifende Einbauten erreicht werden kann. In der Praxis können die Rohre bzw. flächigen Hohlgebilde aus mikroporösem Polypropylen, PVDF oder PTFE bestehen.

Bei der vorteilhaften Weiterbildung nach Anspruch 10 wird zum einen verhindert, daß das eventuell im Überfluß gebildete Süßwasser in tiefere Bodenbereiche absinkt, während zum anderen der Aufstieg von eventuell vorhandenem salzreichem Grundwasser wirksam vermieden wird.

Ggfs. kann auch die Oberfläche des Bodens noch mit einer Folie abgedeckt werden, welche Öffnungen für den Durchtritt der Pflanzen aufweist.

Das erfindungsgemäße Verfahren kann auch zur Verwirklichung einer Mehrphasenbewässerung herangezogen werden, indem das Gesamtrohrleitungsnetz in verschiedene Bewässerungsbereiche unterteilt wird und zu einer bestimmten Zeit immer nur gerade ein Bewässerungsabschnitt mit dem erhitzten Salzwasser beschickt wird. Anschließend erfolgt dann die zyklische Umschaltung auf die übrigen Bewässerungsabschnitte.

Das durch den erfindungsgemäßen Hohlkörper, insbesondere die Rohre bzw. flächigen Hohlgebilde hindurchgeleitete Salzwasser wird, sobald eine bestimmte Maximalkonzentration erreicht ist, im Kreislauf an den Eingang der Leitungsnetze zurückgeführt, wo es z.B. ins Meer abgeführt werden kann.

Die Erfindung wird im folgenden beispielsweise anhand der Zeichnung beschrieben; in dieser zeigt:

Fig. 1     eine sehr schematische Prinzipdarstellung einer erfindungsgemäßen Bewässerungsvorrichtung,

Fig. 2     eine Draufsicht auf ein im Boden verlegtes Rohrleitungssystem einer erfindungsgemäßen Bewässerungsvorrichtung,

Fig. 3     einen Schnitt nach Linie III-III in Fig. 2 in vergrößertem Maßstab,

Fig. 4     eine schematische perspektivische Ansicht eines Rohrleitungssystems einer erfindungsgemäßen Bewässerungsvorrichtung für die Bewässerung von Bäumen und

Fig. 5     eine schematische perspektivische Ansicht eines für die erfindungsgemäße Bewässerungsvorrichtung verwendeten flächigen Hohlgebildes.

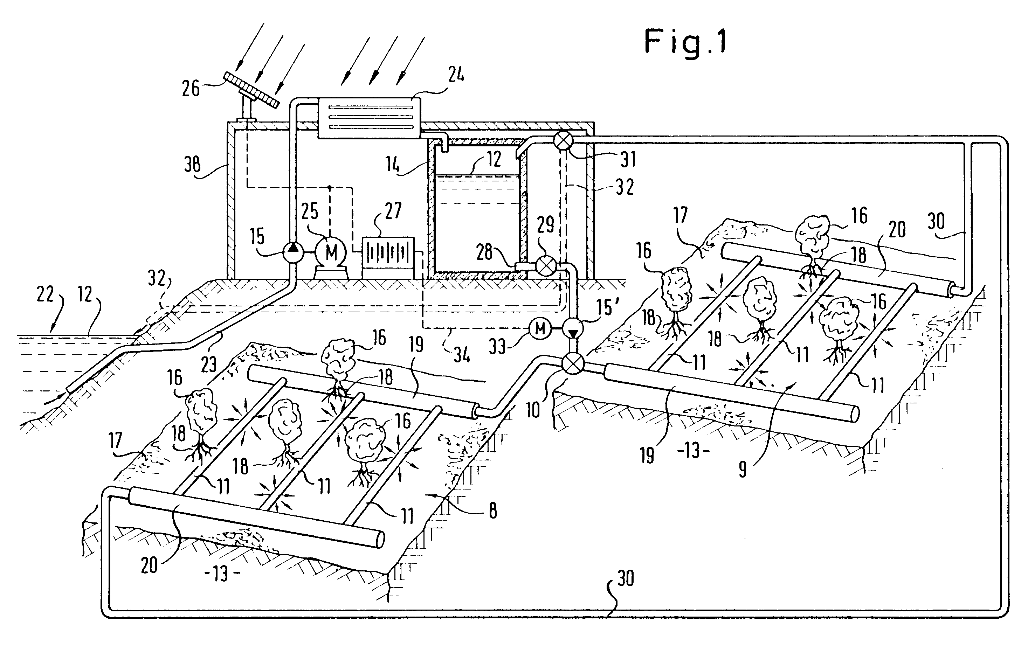

Nach Fig. 1 wird durch eine im Salzwasser 12 eines Meeres 22 mündende Saugleitung 23 mittels einer Saugpumpe 15 Salzwasser 12 angesaugt und durch einen Solarkollektor 24 hindurch in einen wärmeisolierten Vorratsbehälter 14 gepumpt. Der Solarkollektor 24 wird durch durch Pfeile angedeutete Sonnenstrahlung erhitzt und erwärmt das durch ihn hindurchfließende Salzwasser 12 auf eine Temperatur zwischen 40 und $80°$ C.

Die Pumpe 15 wird durch einen Elektromotor 25 angetrieben, der von photoelektrischen Solarelementen 26 mit elektrischer Energie versorgt wird, welche ebenfalls die durch Pfeile angedeutete Sonnenstrahlung empfangen. Die von den Solarelementen 26 erzeugte elektrische Energie wird außerdem zur Aufladung von Akkumulatoren 27 verwendet, die zusammen mit der sonstigen gesamten Installation in einem Gebäude 38 untergebracht sind.

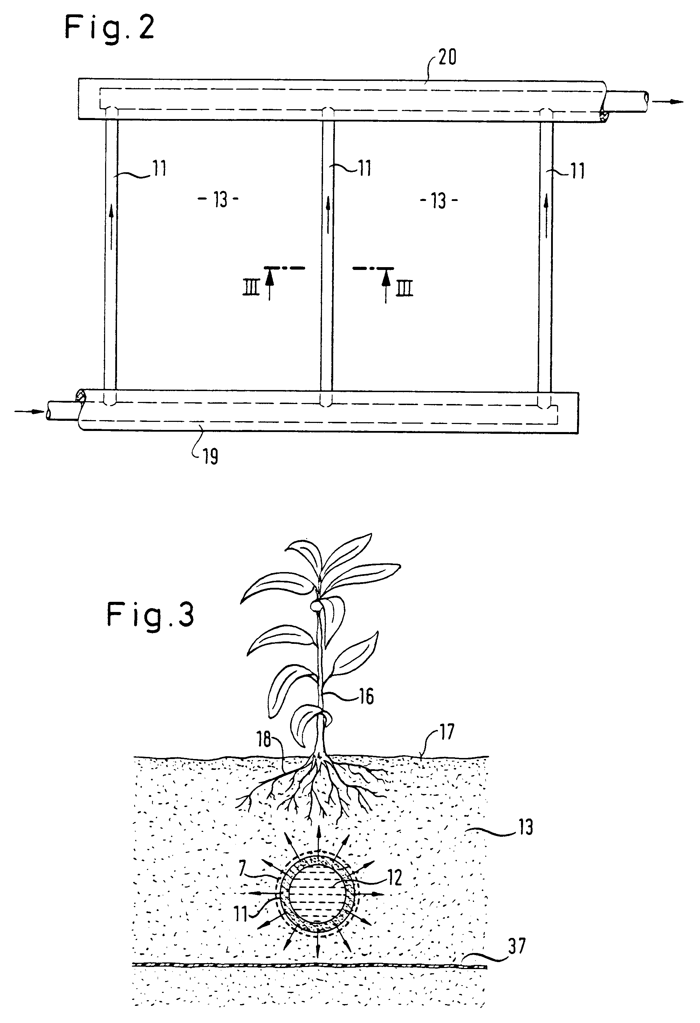

Während das erhitzte Salzwasser 12 oben in den Vorratsbehälter 14 eingeleitet wird, befindet sich im unteren Bereich des Vorratsbehälters 14 eine Abzugsleitung 28, die über ein wahlweise zu öffnendes oder zu schließendes Ventil 29 und eine von einem Elektromotor 33 angetriebene Druckpumpe 15' an ein Verteiler-Umschaltventil 10 angeschlossen ist. Das Verteiler-Umschaltventil 10 weist zwei Ausgänge auf, die jeweils an eine im Erdreich 13 verlegte Salzwasserzufuhrleitung 19 angeschlossen ist, welche auch in Fig. 2 dargestellt ist.

Von der parallel zur Erdoberfläche 17 (Fig. 3) verlegten Salzwasserzufuhrleitung 19 zweigen in Abständen von 1 bis 2 m senkrecht zu ihrer Längsachse mikroporöse, hydrophobe Rohre 11 ab, welche eine Länge von 1 bis 2 m aufweisen und die in eine parallel zur Salzwasserzufuhrleitung 19 im Erdreich 13 verlegte Salzwasserabfuhrleitung 20 münden. Die Leitungen 19, 20 sollen wärmeisoliert sein.

An das von der Zufuhrseite der Salzwasserzufuhrleitung 19 abgewandte Ende der Salzwasserabfuhrleitung 20 ist jeweils eine Rückführleitung 30 angeschlossen, die über ein Ventil 31 zurück zum Vorratsbehälter 14 führt. Vom Ventil 31 zweigt eine nur gestrichelt angedeutete Abfuhrleitung 32 ab, die zurück ins Meer 22 führt.

Der die Pumpe 15' antreibende Elektromotor 33 ist über eine gestrichelt angedeutete elektrische Leitung 34 an die Akkumulatoren 27 angeschlossen.

Aus Fig. 3 ist die optimale Tiefenanordnung der mikroporösen, hydrophoben Rohre 11 zu ersehen. Die Rohre 11 sind im oder unmittelbar unter dem Bereich der Wurzeln 18 einer in die Oberfläche 17 des Bodens eingesetzten Pflanze 16 verlegt.

In einem Abstand von 10 bis 20 cm unterhalb der Rohre 11 ist das Erdreich 13 durch eine wasserundurchlässige Folie 37 nach unten bzw. oben abgedichtet.

Die Arbeitsweise der beschriebenen Bewässerungsvorrichtung ist wie folgt:

Während der Tagstunden wird durch die Pumpe 15 kontinuierlich Salzwasser 12 in den Solarkollektor 24 geleitet, von wo aus es nach Erhitzung auf 40 bis 80° C in den Vorratsbehälter 14 gelangt, bis dieser vollständig gefüllt ist.

Gleichzeitig werden die Akkumulatoren 27 über die Solarelemente 26 aufgeladen.

Während der Nachtstunden wird das Ventil 29 geöffnet, so daß das Salzwasser 12 je nach der Stellung des Verteiler-Umschaltventils 10 aus dem Vorratsbehälter 14 in die mikroporösen, hydrophoben Rohre 11 des einen oder anderen Bewässerungsabschnittes bzw. Beetes 8 bzw. 9 gelangen kann. Aufgrund seiner höheren Temperatur gegenüber der Temperatur des Erdreichs 13 verdampft hierbei ständig Wasser, welches als Wasserdampf durch die Wandung der Rohre 11 ins Erdreich 11 eintritt, was in den Fig. 1 und 3 durch Pfeile angedeutet ist. In dem kälteren Erdreich 13 kondensiert der Wasserdampf, so daß destilliertes Wasser entsteht, welches von den Wurzeln 18 der Pflanzen 16 aufgenommen wird.

Das durch die von den Akkumulatoren 27 angetriebene Pumpe 15' durch die Rohre 11 gedrückte Salzwasser wird je nach der Stellung des Ventils 31 entweder in den Behälter 14 oder das Meer 22 zurückgeführt, was von der Konzentration des Salzwassers abhängt. Die Darstellung in Fig. 1 ist nur rein schematisch zu verstehen; vorteilhafterweise ist für das rückgeführte, konzentrierte Salzwasser ein besonderer Vorratsbehälter vorgesehen, aus dem dann das jetzt abgekühlte, konzentrierte Wasser tagsüber ebenfalls durch einen Solarkollektor in den für die Bewässerung der nächsten Nacht bereitstehenden Vorratsbehälter umgepumpt wird. In Fig. 1 sind nur 2 Beete 8, 9 gezeigt. Tatsächlich wird jedoch mit einer Anlage eine Vielzahl von Beeten zyklisch nacheinander bewässert, wozu das Verteiler-Umschaltventil 10 entsprechend viele Schaltstellungen aufweist.

Die Temperatur des im Vorratsbehälter 14 gespeicherten warmen Salzwassers sollte mindestens 40° C betragen. Eine höhere Temperatur von beispielsweise 70 bis 80° C kommt dann in Betracht, wenn die Rohre 11 so tief unterhalb der Pflanzen 16 verlegt sind, daß eine pflanzenschädigende Erhitzung der Wurzeln 18 nicht zu befürchten ist.

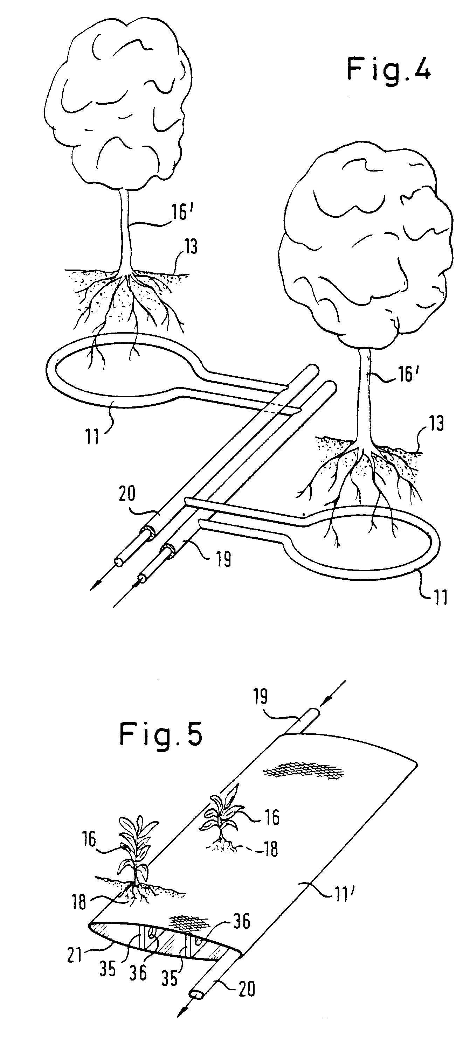

Fig. 4 zeigt, wie durch ringförmiges Herumlegen der Rohre 11 um Bäume 16' auch größere Pflanzen bewässert werden können.

Nach Fig. 5 ist im Erdreich statt der Rohre 11 ein flächiges Hohlgebilde 11' verlegt, dessen Unterseite aus einer dampf- und wasserundurchlässigen Folie 21 besteht, während die Oberseite aus mikroporösem, hydrophobem Material besteht, durch welches hindurch der aus dem Salzwasser 12 gebildete Wasserdampf hindurchtreten kann. Damit das flächige Hohlgebilde nicht durch den Bodendruck zusammengedrückt wird, sind erfindungsgemäß in seinem Innern einen ausreichenden Hohlraum für den Durchgang des Salzwassers gewährleistende Stege 35 vorgesehen, welche entweder nur in Abständen angeordnet sind oder Bohrungen 36 zum Querdurchgang des Salzwassers aufweisen.

Der Betrieb der Bewässerungsvorrichtung während der Nacht geht bevorzugt diskontinuierlich in dem Sinne vor sich, daß zunächst die Rohre 11 bzw. Hohlgebilde 11' eines Abschnittes (z.B. 8, 9) von erhitztem Salzwasser durchströmt werden, bis die Temperaturdifferenz zwischen Salzwasser und Erdreich einen vorbestimmten Wert von z.B. 5° C erreicht. Dann wird das Verteiler-Umschaltventil 10 auf einen anderen Bewässerungsabschnitt umgeschaltet, wo das Erdreich 13 noch oder schon wieder eine den erforderlichen Temperaturgradienten gewährleistende niedrige Temperatur aufweist.

Bei dem beschriebenen Verfahren erfolgt eine gewisse Selbststeuerung dadurch, daß bei Erhitzung des Erdreiches durch Kondensationswärme der Dampfdurchtritt durch die Wandung der Rohre 11 bzw. Hohlgebilde 11' vermindert wird, was wiederum das Entstehen von Kondensationswärme herabsetzt. Die Temperaturdifferenz zwischen Salzwasser 12 und Erdreich 13 nimmt also wieder zu, und es kann erneut Dampf in größerer Menge durch die Wandungen der Rohre 11 oder Hohlgebilde 11' hindurchtreten.

Besonders vorteilhaft ist das erfindungsgemäße Bewässerungssystem auch an Abhängen anzuwenden, weil das Süßwasser in der Umgebung der Rohre 11 bzw. Kohlgebilde 11' zunächst nur in Dampfform vorliegt, so daß Probleme mit einem zunehmenden hydrostatischen Druck in dem unteren Bereich der Abhänge nicht auftreten.

Gegebenenfalls kann erfindungsgemäß auch die Oberfläche 17 des Bodens noch mit einer Folie abgedeckt werden, welche Öffnungen für den Durchtritt der Pflanzen 16 aufweist.

Gegebenenfalls können die porösen Rohre 11 mit einem gas- und flüssigkeitsdurchlässigen, grobporigen mechanischen Schutzmantel 7 umgeben werden.

**Patentansprüche**

1. Verfahren zum Bewässern von Böden mit aus Salzwasser gewonnenem Süßwasser, bei dem erwärmtes Salzwasser durch in den zu bewässernden Boden verlegte Rohre (11) oder flächige Hohlgebilde (11') geleitet wird, wobei aufgrund einer niedrigeren Umgebungstemperatur des Bodens als das erwärmte Salzwasser Wasserdampf zu in den Boden gelangendem Süßwasser kondensiert wird, dadurch gekennzeichnet, daß die Rohre (11) oder flächigen Hohlgebilde (11') aus hydrophoben, mikroporigem Material bestehen, das Salzwasser den Innenraum der Rohre (11) bzw. flächigen Hohlgebilde (11') voll ausfüllt und das Salzwasser mit einer gegenüber der Temperatur des die Rohre (11) bzw. flächigen Hohlgebilde (11') umgebenden Erdreiches (13) derart erhöhten Temperatur durch das Rohr (11) bzw. die flächigen Hohlgebilde (11') geleitet wird, daß die durch die Wand des Rohres (11) bzw. der flächigen Hohlgebilde (11') tretende Dampfmenge erst im umgebenden Erdreich kondensiert.

2. Verfahren nach Anspruch 1, dadurch gekennzeichnet, daß das Rohr (11) bzw. Hohlgebilde (11') von auf eine vorbestimmte Temperatur erhitztem Salzwasser (12) durchströmt und dann die Strömung abgeschaltet wird, wenn zwischen dem im Rohr (11) oder dem flächigen Hohlgebilde (11') befindlichen Salzwasser (12) und dem umgebenden Erdreich (13), wo die Kondensation stattfindet, im wesentlichen ein Temperaturausgleich stattgefunden hat, und daß nach Abkühlung des Bodens der Salzwasserstrom erneut eingeschaltet wird.

3. Verfahren nach Anspruch 1 oder 2, dadurch gekennzeichnet, daß verschiedene, von Rohren (11) oder Hohlgebilden (11') durchsetzte Flächen zyklisch versorgt werden.

4. Verfahren nach einem der vorhergehenden Ansprüche, dadurch gekennzeichnet, daß das Salzwasser (12) durch Solarenergie erhitzt wird.

5. Verfahren nach einem der vorhergehenden Ansprüche, dadurch gekennzeichnet, daß auch die für das Umpumpen des Salzwassers erforderliche Pumpe (15) durch Solarenergie betrieben wird.

6. Verfahren nach Anspruch 4 oder 5, dadurch gekennzeichnet, daß das tagsüber durch Solarenergie erhitzte Salzwasser (12) in einem isolierten Vorratsbehälter gespeichert wird und die Einleitung des erhitzten Salzwassers (12) in die Rohre (11) bzw. die flächigen Hohlgebilde (11') in den nahe dem Morgen liegenden Nachtstunden erfolgt, wenn das die Rohre (11) bzw. die flächigen Hohlgebilde (11') umgebende Erdreich (13) die niedrigste Temperatur des Tag-Nachtzyklus erreicht.

7. Verfahren nach einem der vorhergehenden Ansprüche, dadurch gekennzeichnet, daß die Temperaturdifferenz zwischen frisch zugeführtem Salzwasser (12) und Erdreich (13) mindestens 3° C beträgt.

8. Verfahren nach Anspruch 7, dadurch gekennzeichnet, daß die Temperaturdifferenz zwischen frisch zugeführtem Salzwasser (12) und Erdreich (13) 20 bis 30° C beträgt.

9. Vorrichtung zur Ausführung des Verfahrens nach einem der vorhergehenden Ansprüche, wobei die Rohre (11) oder Hohlgebilde (11') im Bereich der Wurzeln (18) der zu bewässernden Pflanzen (16) oder unmittelbar darunter im wesentlichen parallel zur Bodenoberfläche verlegt sind, dadurch gekennzeichnet, daß das flächige Hohlgebilde (11') nur oben aus dem hydrophoben, mikroporösen Material besteht und unten durch eine dichte Folie (21) abgeschlossen ist.

10. Vorrichtung Anspruch 9, dadurch gekennzeichnet, daß unterhalb der Rohre (11) bzw. flächigen Hohlgebilde (11') im vertikalen Abstand wasserundurchlässige Folien (22) verlegt sind.

11. Vorrichtung Anspruch 10, dadurch gekennzeichnet, daß der vertikale Abstand 10 bis 50 cm beträgt.

**Claims**

1. A method of watering the ground with fresh water obtained from saltwater, in which heated saltwater is fed through pipes (11) or areal hollow structures (11') laid in the ground to be watered, whereby because of a lower environmental temperature of the ground with respect to the heated saltwater, water vapor condenses as fresh water into the ground, characterised in that the pipes (11) or areal hollow structures (11') consist of a hydrophobic, microporous material; in that the saltwater entirely fills the interior of the pipes (11) or areal hollow structures; and in that the saltwater is fed to the pipes (11) or areal hollow structures (11') with a temperature elevated relative to the temperature of the earth (13) surrounding the pipe (11) or areal hollow structure (11') such that the condensation of the quantity of vapor passing through the wall of the pipe (11) or areal hollow structure (11') first takes place in the surrounding earth.

2. A method in accordance with claim 1, characterised in that the pipe (11) or hollow structure (11') is flowed through by saltwater (12) heated to a predetermined temperature; in that the flow is then switched off when a temperature balance has substantially taken place between the saltwater (12) located in the pipe (11) or areal hollow structure (11') and the surrounding earth (13) where the condensation occurs; and in that after cooling of the earth the flow of saltwater is switched on again.

3. A method in accordance with one of the claims 1 or 2, characterised in that various areas through which pipes (11) or hollow structures (11') pass are supplied cyclically.

4. A method in accordance with one of the preceding claims, characterised in that the saltwater (12) is heated by solar energy.

5. A method in accordance with one of the preceding claims, characterised in that the pump (15) which is necessary for pumping the saltwater is also operated by solar energy.

6. A method in accordance with claim 4 or 5, characterised in that the saltwater (12) heated by solar energy during the day is stored in an insulated supply container; and in that the introduction of the heated saltwater into the pipes (11) or into the areal hollow structures (11) takes place in the night hours close to morning when the earth (13) surrounding the pipes (11) of the areal hollow structures (11') has reached the lowest temperature of the day-night cycle.

7. A method in accordance with one of the preceding claims, characterised in that the temperature difference between the freshly supplied saltwater (12) and the earth (13) amounts to at least 3° C.

8. A method in accordance with claim 7, characterised in that the temperature difference between the freshly supplied saltwater (12) and the earth (13) amounts to 20 to 30° C.

9. Apparatus for carrying out the method of one of the preceding claims, in which the pipes (11) or hollow structures (11') are laid in the region of the roots (18) of the plants (16) to be watered or directly beneath them substantially parallel to the surface of the ground, characterised in that the areal hollow structure (11') consists of the hydrophobic microporous material only at the top and is closed at the bottom by an inpermeable foil (21).

10. Apparatus in accordance with claim 9, characterised in that water-impermeable foils (37) are laid at a vertical distance below the pipes (11) or areal hollow structures (11').

11. Apparatus in accordance with claim 10, characterised in that the vertical distance amounts to 10 to 50 cm.

**Revendications**

1. Procédé pour irriguer des sols au moyen d'eau douce obtenue à partir d'eau salée, dans lequel l'eau salée chauffée est conduite dans des tubes (11) ou des structures creuses planes (11') disposés dans le sol, dont il résulte que, en raison d'une température avoisinante dans le sol inférieure à celle de l'eau salée chauffée, la vapeur d'eau se condense en eau douce dans le sol, caractérisé en ce que les tubes (11) ou structures creuses planes (11') sont réalisés en matériau hydrophobe microporeux, en ce que l'eau salée remplit entièrement le volume intérieur des tubes (11) ou structures creuses planes (11'), et en ce que l'eau salée est conduite dans les tubes (11) ou structures creuses planes (11') à une température augmentée par rapport à la température du sol qui entoure les tubes (11) ou structures creuses planes (11') de telle sorte que la quantité de vapeur qui traverse la paroi des tubes (11) ou des structures creuses planes (11') se condense seulement dans le sol environnant.

2. Procédé selon la revendication 1, caractérisé en ce que le tube (11) ou la structure creuse plane (11') est parcouru par de l'eau salée (12) chauffée à une température prédéterminée, puis que l'écoulement est interrompu lorsque qu'une égalisation de température s'est essentiellement produite entre l'eau salée (12) se trouvant dans le tube (11) ou la structure creuse plane (11') et le sol environnant où se produit la condensation, et en ce que le courant d'eau salée est rétabli après refroidissement du sol.

3. Procédé selon l'une des revendications 1 ou 2, caractérisé en ce que l'on alimente de manière cyclique des surfaces différentes traversées par des tubes (11) ou structures creuses planes (11').

4. Procédé selon l'une des revendications précédentes, caractérisé en ce que l'eau salée (12) est chauffée au moyen d'énergie solaire.

5. Procédé selon l'une des revendications précédentes, caractérisé en ce que la pompe (15) nécessaire pour le pompage de l'eau salée est également entraînée à l'énergie solaire.

6. Procédé selon l'une des revendications 4 ou 5, caractérisé en ce que l'eau salée (12) chauffée pendant le jour à l'énergie solaire est stockée dans un réservoir isolé et en ce que l'on admet de l'eau salée chauffée (12) dans les tubes (11) ou structures creuses planes (11') pendant les heures de nuit proches du matin, lorsque le sol entourant les tubes (11) ou structures creuses planes (11') atteint la température la plus basse du cycle jour-nuit.

7. Procédé selon l'une des revendications précédentes, caractérisé en ce que la différence de température entre l'eau salée (12) nouvellement admise et le sol (13) est au moins 3° C.

8. Procédé selon la revendication 7, caractérisé en ce que la différence de température entre l'eau salée (12) nouvellement admise et le sol (13) est de 20 à 30° C.

9. Dispositif pour la mise en oeuvre du procédé selon l'une des revendications précédentes, dans lequel les tubes (11) ou structures creuses planes (11') sont placés sensiblement parallèlement à la surface du sol dans la région des racines (18) des plantes (16) à arroser ou immédiatement en dessous, caractérisé en ce que les structures creuses planes (11') sont réalisées uniquement à leur partie supérieure en matériau hydrophobe microporeux, et sont fermées à leur partie inférieure au moyen d'une feuille étanche (21).

10. Dispositif selon la revendication 9, caractérisé en ce que des feuilles (22) imperméables à l'eau sont disposées à une distance verticale au dessous des tubes (11) ou structures creuses planes (11').

11. Dispositif selon la revendication 10, caractérisé en ce que la distance verticale est de 10 à 50 cm.

Fig.1

Fig.2

Fig.3

Fig.4

Fig.5